Europäisches Patentamt

European Patent Office

Office européen des brevets

(19)

(11) **EP 1 439 532 A2**

(12) **EUROPEAN PATENT APPLICATION**

(43) Date of publication:
**21.07.2004 Bulletin 2004/30**

(51) Int Cl.⁷: **G11B 7/26**

(21) Application number: **04000882.3**

(22) Date of filing: **16.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.01.2003 JP 2003010391
30.10.2003 JP 2003371031**

(71) Applicant: **Ricoh Company
Tokyo 143-8555 (JP)**

(72) Inventors:
• **Abe, Mikiko**
  **Tokyo 143-8555 (JP)**
• **Yuzurihara, Hajime**
  **Tokyo 143-8555 (JP)**
• **Deguchi, Hiroshi**
  **Tokyo 143-8555 (JP)**
• **Hibino, Eiko**
  **Tokyo 143-8555 (JP)**
• **Miura, Hiroshi**
  **Tokyo 143-8555 (JP)**
• **Yamada, Katsuyuki**
  **Tokyo 143-8555 (JP)**
• **Narumi, Shinya**
  **Tokyo 143-8555 (JP)**
• **Kibe, Takeshi**
  **Tokyo 143-8555 (JP)**
• **Taniguchi, Satoshi**
  **Tokyo 143-8555 (JP)**

(74) Representative: **Barz, Peter, Dr.
Patentanwalt
Kaiserplatz 2
80803 München (DE)**

(54) **Method of initializing phase change optical recording medium**

(57)  An initialization method in which a phase change optical recording medium is initialized with a laser beam having a power density of from 15 to 22 mW/$\mu$m² at a linear velocity of from 8 to 12 m/s. The phase change optical recording medium is formed of a transparent substrate 1 having a guide groove on the surface thereof, a first protective layer 2, a recording layer 3, a second protective layer 5 and a reflective layer 7. The recording layer 3 may be represented by the following composition formula: Ag$\alpha$X$\beta$Sb$\delta$Te$\epsilon$Ge$\gamma$, wherein X is at least one of Ga, In, Tl, Pb, Sn, Bi, Cd, Hg, Mn, Dy, Cu and Au, and $\alpha$, $\beta$, $\delta$, $\epsilon$, and $\gamma$ have units of atomic % and satisfy particular relationships.

## FIG. 2

14m/s DOW1 JITTER (%)

POWER DENSITY OF IRRADIATED LIGHT BEAM (mW/$\mu$m²)

EP 1 439 532 A2

**Description**

**BACKGROUND OF THE INVENTION**

**Field of the Invention**

The present invention relates to an optimal initialization method for a phase change optical recording medium in which information can be recorded in a wide range of linear velocity of from 3.5 to 14 m/s.

**Discussion of the Background**

With an increase of the amount of information, a need exists for recording media in which a great quantity of information can be recorded and played back in high density and at high speed. Phase change optical recording media in which information is recorded and played back by irradiation with a laser beam, especially phase change optical discs, have excellent signal qualities and signals can be recorded therein in high density. In addition, such recording media have excellent high speed accessibility because one-beam overwriting can be easily performed thereon.

Such a phase change optical disc typically contains a light transparent substrate which has a guiding concave groove on a surface thereof for guiding a laser beam. On the light transparent substrate, at least a first protective layer, a phase change recording layer which reversibly changes its phase between an amorphous phase and a crystalline state upon irradiation by a light beam, a second protective layer and a metal reflective layer are overlaid in this order, and further a resin protective layer is provided on the metal reflective layer.

There is another type of disc in which two discs are bonded with a bonding layer therebetween. The disc is typically formed by using one or two optical discs having such a structure as described above with a bonding layer therebetween.

In order to play back data'recorded in an optical disc, difference in reflectivity of the recording layer or difference in phase contrast of the reflected light is typically utilized. These differences are caused by the reversible phase change phenomena between an amorphous phase (i.e., recorded state) and a crystalline phase (i.e., non-recorded state). The crystalline state is typically defined as a non-recorded and erasure state.

The layers of the phase change optical disc described above are typically formed by a vacuum processing method such as sputtering methods and vapor evaporation methods. The state that a recording layer achieves immediately after the recording layer is formed in the manner mentioned above, which is called as-depo state, is an amorphous state in most cases. Therefore, it is necessary to crystallize the recording layer, which is called "initialization". The reason for performing this process is that the time required for crystallizing the as-depo amorphous state is extremely long compared with the time required for crystallizing an amorphous state (marks) that the recording layer achieves due to overwrite recording. The reason therefor is considered to be that there are few crystal nuclei in a recording layer in the as-depo state.

The recording principle in a phase change optical disc is described below.

To switch the state of a recording layer from an amorphous state to a crystalline state or vice-versa, a focused laser beam which is pulsed at the following three power levels is used;

(1) the highest power level of the three for fusing a recording layer;
(2) the medium power level of the three for heating a recording layer to a temperature which is just below the melting point of the material used in the recording layer and above the crystallization point thereof; and
(3) the lowest power level of the three for controlling heating and cooling of a recording layer.

Recording marks are formed by fusing a recording layer using a highest power level laser pulse followed by rapid cooling down. Therefore the recording layer achieves an amorphous state or fine crystal state and as a result the reflectivity of the recording layer lowers.

Recording marks are erased by using a medium power level laser pulse and the recording layer achieves a crystalline state.

By switching the power level of a laser pulse for writing, a crystalline state portion and an amorphous state portion are alternately formed in a recording layer, resulting in recording of information therein.

Generally, the actual recording characteristics of an optical disc which is manufactured by the manufacturing process mentioned above and in which data are recorded in the recording method mentioned above, are greatly dependent on the characteristics of the materials used in the recording layer.

Specific examples of such characteristics of the materials for use in a recording layer are composition ratio, melting point, crystallization temperature and optical constants. Other than these characteristics, the inventors of the present invention have defined "crystallization limit speed" by experiments.

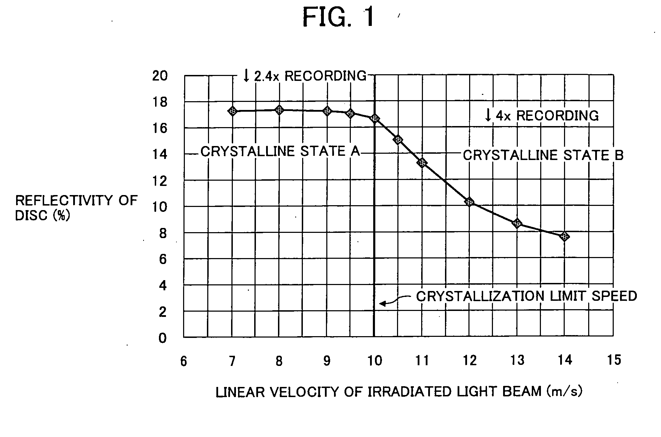

"Crystallization limit speed" will be explained referring to Fig.1. When an optical disc in rotation is irradiated with DC light having a constant power while changing the linear velocity of the irradiation light beam (i.e. , optical disc rotation speed), the recording layer is crystallized. When the disc rotation speed is low, the recording layer is gradually cooled down and thereby achieves a crystalline state again. When the disc rotation speed is high, the recording layer is rapidly cooled down and thereby achieves an amorphous state, namely the reflectivity lowers.

In this estimation method, "the DC light having a constant power" is regarded as the laser pulse having the medium power level (erasure pulse) mentioned above. However, the actual power level of the DC light used is between the highest power level (recording pulse) and the medium power level (erasure pulse). This estimation method focuses on the maximum linear velocity for crystallizing (erasure) the recording layer.

An example of reflectivity of the optical disc is illustrated in Fig. 1. As illustrated in Fig. 1, a speed at which the reflectivity begins to drop sharply is defined as the "crystallization limit speed".

Referring to Fig.1, when the linear velocity surpasses the crystallization limit speed (which is indicated by the bold straight line in Fig. 1) of the recording layer, the reflectivity falls. This means that the crystallization (erasure) is not satisfactory in this region.

Therefore, it has been considered to be preferable that the linear velocity of an irradiation light beam for initialization or overwriting (i.e., erasure pulses) be sufficiently slow relative to the crystallization limit speed of a recording layer in order to obtain a good erasure ratio.

The phase change optical recording medium targeted by the present invention in which information can be recorded over a wide range of linear velocity of from 3.5 m/s to 14 m/s has to have good recording characteristics not only at a low linear velocity but also at a high linear velocity.

It is preferable to use a recording material which achieves a crystallization limit speed of 14 m/s for performing recording and initialization at 4 x (i.e., 14 m/s), but such a material does not have good recording characteristics at a low linear velocity.

Therefore, the crystallization limit speed for a recording layer needs to be set to be 10 m/s, which is 4 m/s slower than the linear velocity (14 m/s) at high linear velocity recording. The reason why information can be recorded at a relatively high speed (14 m/s) compared with the crystallization limit speed (10 m/s) lies in difference in conditions such as power level mentioned above.

When the characteristics of the recording layer are evaluated after the recording layer is initialized at a linear velocity, which is sufficiently slow relative to the crystallization limit speed, and overwritten at a recording linear velocity of 14 m/s, the erasure ratio for initial repetitive recordings (i.e., when the number of overwriting is from one to ten times) is low. This causes a problem in that overwriting should be performed multiple times after initialization to obtain a stable erase ratio.

The reason why the erase ratio is so low for the initial repetitive recordings is unclear. However, judging from the facts mentioned above, it is probable that the first crystalline state of the recording layer which is achieved after initialization is different from the second crystalline state which is achieved again when an amorphous mark is overwritten and erased.

Therefore the reflectivity of the recording layer in the crystalline state is non-uniform, resulting in increase of jitters.

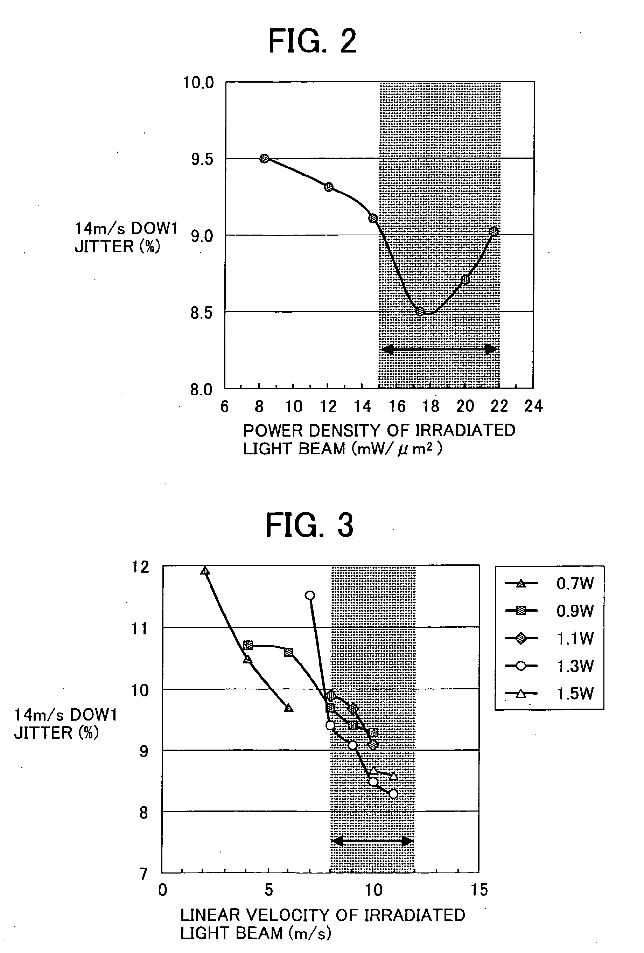

In the current 1-4x (i.e., 3.5 to 14 m/s) optical media, the increase of jitters occur at 4x recording. Referring to Fig.1, 2.4x recording speed is relatively slow compared with the crystallization limit speed and crystalline state A is achieved. The erasing power to achieve the crystalline state A is strong enough to avoid increase of jitters. In contrast, 4x recording speed is relatively high compared with the crystallization limit speed. This means that 4x recording is performed in the region in which an amorphous state is easily achieved as mentioned above. Therefore, the erasing power used for 4x recording is limited to a relatively weak power compared with that used for 2.4x recording in order to achieve crystalline state B. Different from the crystalline state A, the crystalline state B is barely achieved.

In contrast, the reason why the erase ratio is stabilized after a recording layer is overwritten ten times is considered to be that, after the recording layer is overwritten 10 times, the first crystalline state is completely changed to the second crystalline state, resulting in uniforming of the reflectivity of the recording layer.

Therefore, it has been an issue of how to make the reflectivity of the first crystalline state equal to the reflectivity of the second crystalline state, to improve recording characteristics of initial repetitive recordings.

Published unexamined Japanese Patent Applications (hereafter referred to as JOP) Nos. 10-55539, 10-106027, 10-112065, 11-144336, 2000-195111, 2000-195113, 2000-343826, 2002-133711, 9-212918, 10-241211, 2001-126265, 2000-195112, 2000-313170 and 2001-283477 have disclosed phase change optical recording media which can restrain the increase of j itters which occurs in the first several overwritings, and initialization methods for the media.

However, there is no description about specific initialization conditions and methods such as power density and linear velocity in the first eight applications. The last six applications have mentioned initialization methods but the initialization conditions mentioned therein are different from those in the present invention or too wide. Therefore, these initialization conditions are not suitable for the target phase change optical recording medium of the present invention in which information is recorded and played back upon application of a laser beam at a linear velocity in a range of from 3.5 to 14 m/s.

JOP No.10-55539 discloses a phase change optical recording medium in which a ratio Z is from 0.37 to 0. 46, wherein Z represents a crystallization ratio in the recording layer after initialization.

JOP No.10-106027 discloses a phase change optical recording medium including a seed layer which is formed of a mixture film in which metal particles are dispersed in a dielectric material. The seed layer can control particle sizes of the crystal in the recording layer.

JOP No.10-112065 discloses a phase change optical recording medium in which the average particle size of the crystal in the recording layer after initialization is not greater than double the average particle size of crystal in the recording layer after at least 100-time overwritings. Initialization is performed by irradiating a disc in rotation with a laser beam which is relatively wide in the direction perpendicular to the disc rotation direction compared with the disc rotation direction and which has at least two peak power levels in the disc rotation direction.

JOP No.11-144336 discloses an initialization method including the steps of alternately applying a light beam having a power level for fusing the recording layer and a light beam having a power level for crystallizing the recording layer, and finally applying a laser beam having a power level for crystallizing the recording layer in the end, wherein the crystalline state immediately after initialization is the same as the crystalline state after recording and erasing data several tens of times.

JOP No.2000-195111 discloses a phase change optical recording medium wherein the maximum width of the crystalline particle in the recording layer after initialization is from 50 to 500 nm.

JOP No.2000-195113 discloses a phase change optical recording medium in which a ratio Z is from 0.50 to 0.85, wherein Z represents a crystallization ratio in the recording layer after initialization.

JOP No.2000-343826 discloses a phase change optical recording medium wherein an amorphous state achieved immediately after sputtering has a short range order and the number particle size distribution curve of the crystal after crystallization has multiple maxima.

JOP No.2002-133711 discloses a method for initializing a phase change optical recording medium wherein the maximum width of the crystalline particle in the recording layer after initialization is from 0.01 to 0.1 $\mu$m.

JOP No.9-212918 discloses an initialization method including the step of fusing at least part of a recording layer at once by irradiating a recording layer with a laser beam for initialization which forms an oval shape beam spot on the surface of the recording layer while the major axis of the beam spot is set to be perpendicular to the direction of the recording track.

JOP No.10-241211 discloses a method of initializing a recording layer after reforming an amorphous state achieved just after the recording layer is formed.

JOP No .2001-126265 discloses a method in which recording after initialization is performed by overwriting at least twice.

JOP No. 2000-195112 discloses an initialization method in which the intensity in the longitudinal direction of an elliptical laser beam is reduced at both ends, to obtain the initialization quality that is uniform in the vertical to the track, and the average intensity of the area up to 10% from both ends of the half value width of the laser beam intensity distribution is made smaller than the average intensity within the half value width.

JOP No. 2000-313170 discloses an initialization method of irradiating an optical recording medium with a laser beam having a power density of P (mW/$\mu$m$^2$) for T ($\mu$sec), wherein P and T satisfy the relationships of $1.0 \leq P \leq 5.0$ and $1 \leq T \leq 100$, respectively.

JOP No.2001-283477 discloses an initialization method of irradiating the recording layer with a light beam at a linear velocity of 7 m/s in such a manner that the laser beam does not focus on the position of the recording layer of an optical recording medium.

Because of these reasons, a need exists for a method of effectively initializing phase change optical recording media.

## SUMMARY OF THE INVENTION

Accordingly, an object of the present invention is to provide an optimal method of effectively initializing a phase change optical recording medium in which information can be recorded over a wide range of linear velocity of from 3.5 to 14 m/s. Briefly, this object and other objects of the present invention as hereinafter will become more readily apparent can be attained by an initialization method including the step of initializing a phase change optical recording medium with a laser beam with a power density of from 15 to 22 mW/$\mu$m$^2$ at a linear velocity of from 8 to 12 m/s to initialize the phase change optical recording medium. The phase change optical recording medium is formed of a transparent substrate having a guide groove on the surface thereof, a first protective layer which is overlaid on the transparent substrate, a recording layer which is overlaid on the first protective layer, a second protective layer which is overlaid on the recording layer and a reflective layer which is overlaid on the second protective layer. The recording layer consists essentially of a material which is represented by the following composition formula: $Ag\alpha X\beta Sb\delta Te\epsilon Ge\gamma$, wherein X is at least one element selected from the group of Ga, In, Tl, Pb, Sn, Bi, Cd, Hg, Mn, Dy, Cu and Au, and $\alpha$, $\beta$, $\delta$, $\epsilon$, and $\gamma$ have units of atomic % and satisfy the following relationships: when $\alpha = \beta = 0$, $\delta + \epsilon + \gamma = 100$, $60 \leq \delta \leq 80$, $0 \leq \epsilon \leq 30$, and $1 \leq \gamma \leq 10$, and when at least one of $\alpha$ and $\beta$ is greater than 0, $\alpha + \beta + \delta + \epsilon + \gamma = 100$, $5 \leq \alpha + \beta + \gamma \leq 9$, $0 \leq \alpha \leq 2$, $0 \leq \beta \leq 8$, $60 \leq \delta \leq 80$, $0 \leq \epsilon \leq 30$, and $1 \leq \gamma < 9$.

It is preferable that the recording layer have a thickness of from 8 to 20 nm.

It is also preferable that the phase change optical recording medium further contain an oxide layer which includes at least $ZrO_2$ and which is located in at least one of a position between the recording layer and the first protective layer and a position between the recording layer and the second protective layer.

It is also preferable that the oxide layer contain $ZrO_2$ as a main component.

It is also preferable that the oxide layer include a titanium oxide.

It is also preferable that the content of the titanium oxide be not greater than 60 mole % based on the total amount of materials included in the oxide layer.

It is further preferable that the oxide layer further contain at least one of a rare earth oxide and an oxide consisting a group IIa element exclusive of Be.

It is also preferable that the content of the at least one of the rare earth oxide and the oxide consisting of a group IIa element exclusive of Be range from 1 to 10 mole % based on $ZrO_2$.

It is also preferable that the oxide layer have a thickness of from 1 to 20 nm.

It is also preferable that the irradiation be performed while the laser beam forms a spot having an area not greater than 200 $\mu m^2$ on a surface of the recording layer, and a light source of the laser beam has an output power of from 0.7 to 2.5 W.

It is also preferable that the linear velocity be in a range within + or - 2 m/s of a crystallization limit speed of the recording layer.

It is also preferable that the irradiation be performed while the laser beam forms an oval-shaped spot, wherein the following relationship is satisfied: $d/n \leq pf \leq d(n-1)/n$, wherein pf represents a feeding pitch of the laser beam, d represents a half width diameter of the oval-shaped spot in a longitudinal direction, and n is an integer of from 2 to 5, and wherein there is no portion in the recording layer which is subject to irradiation multiple times.

These and other objects, features and advantages of the present invention will become apparent upon consideration of the following description of the preferred embodiments of the present invention taken in conjunction with the accompanying drawings.

## BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

Fig.1 illustrates a diagram for explaining crystallization limit speed and difference of crystalline state depending on recording speed;

Fig.2 illustrates dependence of DOW1 characteristics on power density of light beam when the disc manufactured in Example 1 is initialized by the light beam at a constant linear velocity and a constant transfer pitch, followed by recording at a linear velocity of 14 m/s;

Fig.3 illustrates dependence of DOW1 characteristics on linear velocity of light beam when the disc manufactured in Example 1 is initialized by the light beam at a constant transfer pitch without changing the spot size of the light beam, followed by recording at a linear velocity of 14 m/s;

Fig.4 illustrates dependence of DOW1 characteristics to linear velocity of light beam when the discs manufactured in Examples 1 and 5 are initialized by the light beam at a constant linear velocity while changing the power density, followed by recording at a linear velocity of 14 m/s;

Fig.5 illustrates the structure of an embodiment of the optical recording medium for use in the initialization method of the present invention;

Fig.6 illustrates the structure of another embodiment of the optical recording medium for use in the initialization method of the present invention;

Fig. 7 illustrates the structure of yet another embodiment of the optical recording medium for use in the initialization method of the present invention;

Fig.8 illustrates the structure of a further embodiment of the optical recording medium for use in the initialization method of the present invention; and

Fig.9 illustrates the structure of a still further embodiment of the optical recording medium for use in the initialization method of the present invention.

## DETAILED DESCRIPTION OF THE INVENTION

The present invention will be described in detail below.

The crystalline state of a recording layer of a phase change optical recording medium after initialization changes depending on the initialization method. The laser beam used for initialization is different from the laser beam used for erasure in overwriting. Spot size (i.e., beam diameter), output power and transfer pitch are different. Therefore, heat diffusion in an actual optical recording medium caused by initialization is greatly different from that caused by overwriting, and therefore it is impossible to solve the problems mentioned above by simply adjusting the linear velocity.

The inventors of the present invention have studied various initialization conditions so that the reflectivity of the recording layer after initialization becomes equal to that after overwriting and found that the erase ratio at the initial repetitive recordings can be improved by initializing the specific phase change optical recording medium mentioned above under the specific conditions mentioned above.

Namely, the phase change optical recording medium for use in the present invention contains at least a transparent substrate, and a first protective layer, a recording layer, a second protective layer and a reflective layer which are overlaid on the transparent substrate. The transparent substrate has a guide groove on the surface thereof. The recording layer reversibly achieves a crystalline state and an amorphous state, and is made of a material represented by the formula mentioned above. In addition, when the reflective layer contains Ag and the second protective layer contains S, it is preferable to provide a sulfuration prevention layer between the reflective layer and the second protective layer to prevent deterioration of the reflection layer due to sulfuration of Ag.

In order to obtain a phase change recording medium in which information can be recorded and played back upon irradiation of a laser beam over a wide range of linear velocity of from 3. 5 to 14 m/s, it is necessary to use a material for the recording layer, which contains Sb and Te as main components, Ge and Ag as essential components, and at least one element selected from the group of Ga, In, Tl, Pb, Sn, Bi, Cd, Hg, Mn, Dy, Cu and Au is added. It is already confirmed that this recording layer material can be used for recording over a wide range of linear velocity and that it is easy to resolve the problem of difference in the reflectivity between the crystalline states after initialization and after overwriting by using the following initialization method. Namely, an initialization method includes the step of initializing a phase change optical recording medium with a laser beam with a power density of from 15 to 22 $mW/\mu m^2$ at a linear velocity of from 8 to 12 m/s to initialize the phase change optical recording medium. The phase change optical recording medium is formed of a transparent substrate having a guide groove on the surface thereof, a first protective layer which is overlaid on the transparent substrate, a recording layer which is overlaid on the first protective layer, a second protective layer which is overlaid on the recording layer and a reflective layer which is overlaid on the second protective layer. The recording layer consists essentially of a material which is represented by the following composition formula: $Ag\alpha X\beta Sb\delta Te\varepsilon Ge\gamma$, wherein X is at least one element selected from the group of Ga, In, Tl, Pb, Sn, Bi, Cd, Hg, Mn, Dy, Cu and Au, and $\alpha$, $\beta$, $\delta$, $\varepsilon$, and $\gamma$ have units of atomic % and satisfy the following relationships: when $\alpha = \beta = 0$, $\delta + \varepsilon + \gamma = 100$, $60 \leq \delta \leq 80$, $0 \leq \varepsilon \leq 30$, and $1 \leq \gamma \leq 10$, and when at least one of $\alpha$ and $\beta$ is greater than 0, $\alpha + \beta + \delta + \varepsilon + \gamma = 100$, $5 \leq \alpha + \beta + \gamma \leq 9$, $0 \leq \alpha \leq 2$, $0 \leq \beta \leq 8$, $60 \leq \delta \leq 80$, $0 \leq \varepsilon \leq 30$, and $1 \leq \gamma < 9$. A laser beam for initialization having a spot area not greater than 200 $\mu m^2$ and a light source of the laser beam having an output power of from 0.7 to 2.5 W are used for initialization. The laser beam for initialization is scanned at a linear velocity in a range within + or -2 m/s of a crystallization limit speed of the recording layer.

The transfer pitch of the laser beam for initialization, which forms an oval-shaped spot while the irradiation is performed, satisfies the following relationship: $d/n \leq pf \leq d(n-1)/n$, wherein pf represents a feeding pitch of the laser beam, d represents a half width diameter of the oval-shaped spot in a longitudinal direction, and n is an integer of from 2 to 5, and wherein there is no portion in the recording layer which is subject to irradiation multiple times.

The optimal composition ratio of the elements will be described below.

Sb-Te alloys of a composition ratio $Sb_{70}Te_{30}$ are phase change recording materials which rarely cause segregation and which have excellent repetitive recording characteristics. It is possible to adjust the crystallization limit speed by changing the ratio of Sb and Te. When the ratio of Sb is increased, the crystallization limit speed is increased and thereby data transfer speed can be high. The optimal ratio of Sb is from 60 to 80 atomic % to prepare the target phase change optical recording media of the present invention.

In the material $Ag\alpha X\beta Sb\delta Te\varepsilon Ge\gamma$ mentioned above for use in the present invention, Sb and Te are included in large amounts.

Therefore, Sb and Te can be considered as mother materials, and Ag, X and Ge, as additive elements. Having focused attention on the total amount of the added elements, the inventors of the present invention have studied the relationship between the total amount of the additive elements and the characteristics of the disc and found that it is preferable to satisfy the relationship: $5 \leq \alpha + \beta + \gamma \leq 9$. That is, when the total amount of Ag, X and Ge (hereinafter referred to as the total addition amount) is too large, disc characteristics of the disc, especially after initial repetitive recordings, are poor. To the contrary, when the total addition amount is too small, preservation reliability of the disc deteriorates. The reasons therefor are considered to be that when the total addition amount is too large, the influence of the elements on Sb-Te becomes also large, and thereby the phase change phenomena can be adversely affected. When the total addition amount is too small, the characteristics of Sb-Te are dominant and preservation reliability of the disc deteriorates, which is a problem specific to Sb-Te.

Ge is an essential additive element because addition of a small amount of Ge can greatly improve preservation reliability of a phase change optical recording medium without raising the crystallization point of a material as much as Ga.

Addition of a small amount of Ga can improve crystallization limit speed and raise the crystallization point of the recording layer material to an extent such that an optical recording material containing Ga can have an excellent mark stability. However, addition of too large an amount of Ga excessively raises the crystallization point of a recording layer and thereby a crystalline state which has a uniform and high reflectivity cannot be achieved upon initialization.

Therefore, it is preferred that the ratio of Ga is not greater than 8 atomic %.

The element In has the same effect as Ga but does not raise the crystallization point as much as Ga. Therefore, to avoid the problems occurring upon initialization, it is useful to use In as a supplementary element to Ga.

Furthermore, other than Ga and In, Tl, Pb, Sn, Bi, Cd and Hg are also effective in improving the crystallization limit speed.

It is unknown why addition of these elements accelerates the crystallization limit speed. However, the reason is considered to be that the crystallization of an Sb-Te alloyed metal is promoted. Therefore, Ga, In and Bi are relatively preferable because of having the same valence as Sb. In addition, Sn is also preferable because Sn has an atomic number relatively near to that of Sb compared with the others and has a high affinity for Sb.

However, addition of too large an amount of these elements deteriorates the reflectivity of playback light and jitters immediately after initialization. Therefore it is necessary to limit the ratio of these elements of Ga, In, Tl, Pb, Sn, Bi, Cd and Hg to not greater than 8 atomic %.

In addition, the inventors of the present invention have made various studies on the additive elements and found that Mn and Dy have the same effect as In. Especially Mn can improve the crystallization speed and in addition has such an excellent preservation reliability effect that the addition amount of Ge can be reduced.

It is preferable that at least one of Cu and Ag be included with the additive elements mentioned above. The elements Cu and Ag are effective at improving reliability. Therefore, by making a good combination of Cu, Ag and the additive elements mentioned above, a desired optical recording medium suitable for recording over a wide range of linear velocity can be obtained and further a recording material which does not cause the problem of differences in reflectivity between the crystalline state after initialization and the crystalline state after overwriting can be designed.

It is preferable that the recording layer have a thickness of from 8 to 20 nm. When the recording layer is too thin, recording characteristics deteriorate by repetitive overwriting. When the recording layer is too thick, it is difficult to initialize the recording layer uniformly. In addition, the light transmittance thereof is insufficient and therefore the reflectivity thereof is low, resulting in decrease of modulation depth level. The thickness of the recording layer is preferably from 10 to 17 nm and more preferably from 10 to 12 nm.

The amorphous state (as-depo state) of the recording layer immediately after the layer is formed varies depending on layer forming conditions. In as-depo state, atoms are relatively disorderly aligned on the substrate. The higher this disorder level, the longer the initialization time.

In this case, it is difficult for the recording layer medium to achieve a desired crystalline state. However, when sputtering is performed at low gas pressure upon application of high voltage, sputter particles flying over to the substrate are thought to have a relatively large kinetic energy compared with that in sputtering under a typical condition. Therefore, an oriented film with certain alignment can be formed and thereby the recording layer can achieve a desired crystalline state after initialization.

Therefore, it is preferable to adopt a low gas pressure and high voltage sputtering method for forming the recording layer.

Furthermore, it is found that, when an oxide layer including $ZrO_2$ as an essential element is provided adjacent to the recording layer (i.e., between the recording layer and the first protective layer and/or between the recording layer and the second protective layer), the phase change optical recording medium in which information can be recorded over a wide range of linear velocities of from 3.5 m/s to 14 m/s can be prevented from causing the bad initialization problem.

The reason therefor is considered to be that because an oxide layer including $ZrO_2$ has a relatively low thermal conductivity compared with a conventional protective layer including $ZnS\text{-}SiO_2$ and therefore the recording layer can absorb initialization energy efficiently, which results in resolution of the bad initialization problem due to shortage of energy. This effect is enhanced as the content ratio of $ZrO_2$ included in the oxide layer increases.

When an oxide layer contains $ZrO_2$ as a main component, this effect is further enhanced. The reason therefor is that characteristics of $ZrO_2$ are reflected in the oxide layer. "Main component" in this context means that $ZrO_2$ occupies

the first place in the ratio of the materials contained in the oxide layer.

This effect can be produced when an oxide layer with a thickness of, for example, 1 nm, is provided. The bad initialization problem can be resolved by raising $ZrO_2$ ratio in'an oxide layer or by thickening the thickness thereof. However, when the oxide layer is too thick, preservation reliability deteriorates. Therefore, the thickness of the oxide layer is limited to from 1 to 20 nm and preferably from 2 to 6 nm to avoid the deterioration of preservation reliability.

In addition, it is preferred that the oxide layer including $ZrO_2$ as a main component also includes a titanium oxide and a rare earth oxide or an oxide of IIa element exclusive of Be.

Addition of a titanium oxide lowers thermal conductivity of the oxide layer. In addition, titanium oxides are effective in adjusting optical characteristics of the oxide layer and in reducing deterioration of preservation reliability. Rare earth oxides or oxides of group IIa elements exclusive of Be have an effect of reducing volume variance of $ZrO_2$ due to temperature changes, and thereby stability of the oxide layer against temperature fluctuation upon initialization and recording can be improved.

To obtain these effects, the content of a titanium oxide is preferably limited to not greater than 60 mole % based on the total content of the materials included in an oxide layer and the content of rare earth oxides or oxides of group IIa elements exclusive of Be is preferably from 1 to 10 mole % against the content of $ZrO_2$.

The content of a titanium oxide is not necessarily limited to this range. However, when the content of a titanium oxide is too much, the resultant oxide layer cannot have the effects. Therefore, it is preferable to keep the content of a titanium oxide within the range mentioned above.

Specific examples of such rare earth oxides or oxides of group IIa elements exclusive of Be include oxides of Y, Mg and Ca. When the oxide layer includes oxides of Y, Mg and Ca as a solid solution with $ZrO_2$ preservation reliability of the medium significantly deteriorates and therefore it is preferable to use such oxides in combination with oxides such as $TiO_2$.

When the optical recording medium mentioned above is initialized under the particular initialization conditions such that the light power density is from 15 to 22 mW/$\mu m^2$ and the linear velocity of light beam is from 8 to 12 m/s, the problems mentioned above are solved and the thus obtained phase change optical recording media have good characteristics for initial repetitive recordings.

In the present invention, the initialization conditions are characterized in that the light power density is relatively high and the linear velocity of a light beam is relatively fast compared with those in conventional initialization methods.

The light power density for the initialization operation in the present invention is determined as follows. When a recording layer material having a fast crystallization limit speed is used for recording at a high linear velocity, a high irradiation light power is required. This is because initialization tends to become difficult as the crystallization limit speed of the recording layer material increases. In addition, when initialization is performed with a power density in the range of from 15 to 22 mW/$\mu m^2$ while the linear velocity and transfer pitch are kept constant, characteristics of the medium in initial repetitive recordings, especially Direct Overwrite 1 (DOW1) characteristics (i.e., recording characteristics for the first overwriting), can be further improved as illustrated in Fig.2.

The linear velocity of irradiation light beam for initialization is determined as follows. The dependence of DOW1 characteristics at a recording linear velocity of 14 m/s on the linear velocity of light beam for initialization with the spot size and the transfer pitch thereof constant is studied. The result is that, as illustrated in Fig.3, for each output power, DOW1 characteristics tend to be improved as the linear velocity of light beam for initialization increases. In addition, the improvement effect is particularly high at the linear velocities of from 8 to 12 m/s.

In the case of the light power density being out of the aforementioned range, the heat is accumulated in multiple tracks and thereby the portion subject to initialization achieves an amorphous state if the irradiation light power density applied is sufficient for initialization. In addition, when the disc is initialized using an excessive power density, the entire disc is damaged.

When the target recording layer material of the present invention, which has a crystallization limit speed of 10 m/s, is initialized at a linear velocity of irradiation light beam greater than 12 m/s (not shown in Fig.3), crystallization of the disc is unsatisfactory, resulting in bad initialization.

It is preferable in the present invention to satisfy the following conditions:

(i) the initialization laser beam has a spot area not greater than 200 $\mu m^2$ and a light source of the initialization laser beam has an output power of from 0.7 to 2.5 W;

(ii) The irradiation laser beam is scanned at a linear velocity in a range within + or - 2 m/s of the crystallization limit speed of the recording layer; and

(iii) the initialization laser beam is oval-shaped and the transfer pitch thereof is within a range of from 1/n to (n-1)/n of the half width of the oval laser spot in the direction of the major axis of the oval spot, wherein n is a positive integer and not greater than 5, and wherein there is not a portion which is subject to irradiation multiple times.

For example, when a phase change optical recording medium is a disc, the following initialization method is preferably used. Namely, a laser beam which has an oval shape elongated in the radius direction irradiates the disc which is rotated at a constant linear velocity while moving the laser beam in the radius direction with a transfer pitch which is shorter than the spot size (i.e., half width) in the direction of the major axis of the oval-shaped laser beam. Thus, the recording layer is gradually annealed and crystallized.

As a light source for use in initialization, various kinds of sources such as laser diodes and gas lasers can be used. Initialization using a large sized laser diode (LD) is preferable in the light of uniformity of the crystallized layer, disc signal characteristics and productivity. Considering that the current maximum output power of LDs is 2.5 W, it is preferable that the size (area) of the light source used for initialization be not greater than 200 $\mu m^2$ to stably perform initialization at an irradiation light power density of from 15 to 22 mW/$\mu m^2$.

For example, when the output beam power is set to 1.3 W using a light source having a spot area of 75 $\mu m^2$, the resultant irradiation light has a uniform and stable beam profile.

There is no particular lower limit to the spot size but when the spot size is too small, initialization takes a long time and productivity declines. Therefore, it is preferable to determine the spot size depending on the LD output power.

In general, a phase change optical recording medium in which information can be recorded over a wide range of linear velocity of from 3.5 to 14 m/s tends to cause the problem of difference in reflectivity between the crystalline state after initialization and the crystalline state after overwriting. The problem can be solved by setting the linear velocity of an initialization light beam to a range within + or - 2 m/s of the crystallization limit speed of the target recording layer material.

Furthermore, it is found that a linear velocity in the range from about the crystallization limit speed to the crystallization limit speed + about 1 m/s is particularly effective to alleviate the reflectivity difference problem. When the ratio of the linear velocity of an initialization laser beam to the crystallization limit speed of a recording material is too large, crystallization is unsatisfactorily performed. When the ratio of the linear velocity of an initialization laser beam thereto is too low, initialization requires an impractically long time. In addition, in this case, it is also confirmed that the reflectivity difference problem is difficult to solve.

The entire surface of the optical disc is initialized by moving an initialization light beam pitch by pitch. Specifically, an oval-shaped irradiation light beam scans the optical disc which rotates, while the minor axis of the oval beam is set to be parallel to the circumference direction of the disc. When the optical disc is rotated by 1 turn, the light beam moves in the direction of the major axis thereof, i.e., radius direction of the disc.

The moving distance (transfer pitch) in the radius direction per rotation needs to be shorter than the major axis diameter of the beam spot in order to avoid non-uniform initialization.

However, it is found that it is preferable for the disc not to be overlappingly initialized in the radius direction, to prevent decrease of productivity, and non-uniform initialization in the radius direction of the disc, which is caused by uneven application of light energy. In addition, DOW1 characteristics at a recording linear velocity of 14 m/s are also found to ameliorate.

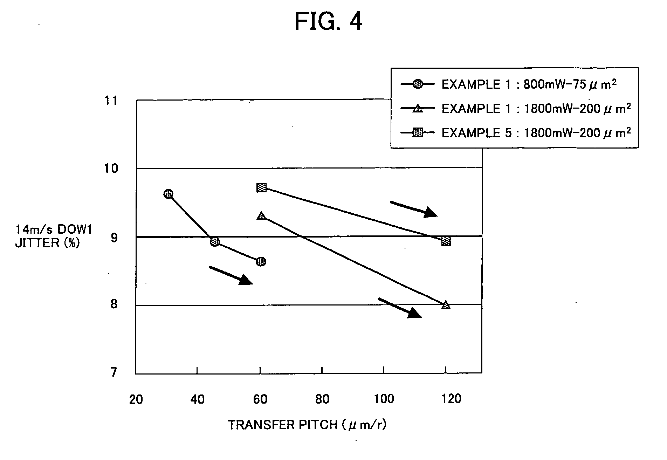

Fig.4 illustrates dependence of DOW1 characteristics on transfer pitch of initialization light beam when recording is performed at a recording linear velocity of 14 m/s while changing the power density of initialization light beam. In this case, the linear velocity of initialization light beam is kept constant and the spot size (i.e., half width) is 1 $\mu m$ in the direction of the minor axis of the oval light spot. It is found that, in each power density or spot size, DOW1 characteristics tend to ameliorate as the transfer pitch increases.

In order to perform initialization such that irradiation is performed without overlapping in the radius direction, the transfer pitch of the initialization light beam and the major axis diameter thereof are equalized. However, an actual irradiation light beam has a beam profile such that irradiation light power density at the beam edge is not sufficient. Therefore, reflectivity of the disc after initialization may vary (non-uniform initialization) in the radius direction. Therefore, it is preferable to set the transfer pitch of the initialization light beam having an oval shape to from 1/n to (n-1)/n, (n is an integer) of the laser spot size (i.e., half width) in the direction of the major axis of the oval light beam.

When irradiation is performed while overlapping (n is not 1), it is found from Fig.4 that DOW1 characteristics are improved as the transfer pitch increases. Therefore, it is preferable that n is less than 6.

The transfer pitch is determined based on "1/n of the length of the major axis of a beam, wherein n is an integer", but is not necessarily to be exactly 1/n. A variation of from - 5% to + 5% is permitted in the present invention.

It is also preferable that a medium having a different shape from a disc is not overlappingly irradiated too many times. Appropriate measures are preferably taken according to its shape.

Embodiments of the present invention will be described referring to the accompanying drawings.

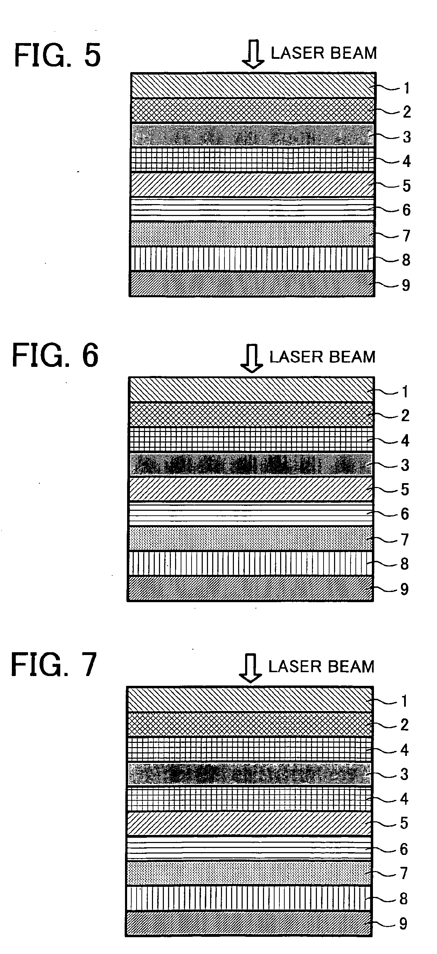

Figs.5 to 7 illustrate structures of embodiments of the phase change optical recording medium for use in the present invention. In these embodiments, a first protective layer 2, a phase change recording layer 3, a second protective layer 5, a sulfuration protection layer 6 and a reflective layer 7 are overlaid on a first substrate 1. Also, an oxide layer 4 including $ZrO_2$ as an essential component is provided on one or both surfaces of the recording layer 4 and a second substrate 9 is bonded to the reflective layer 7 with a resin protective layer 8 therebetween.

The essence of the present invention is to improve the erase ratio after initial repetitive recordings of the specific phase change recording medium which satisfies the requirements mentioned above and which is initialized by the initialization method of the present invention.

Namely, the initialization method at least satisfies the following requirement.

The initialization method includes the step of initializing a phase change optical recording medium with a laser beam with a power density of from 15 to 22 mW/$\mu$m$^2$ at a linear velocity of from 8 to 12 m/s to initialize the phase change optical recording medium. The phase change optical recording medium is formed of a transparent substrate having a guide groove on the surface thereof, a first protective layer which is overlaid on the transparent substrate, a recording layer which is laid on the first protective layer, a second protective layer which is overlaid on the recording layer and a reflective layer which is overlaid on the second protective layer. The recording layer consists essentially of a material which is represented by the following composition formula: $Ag_\alpha X_\beta Sb_\delta Te_\varepsilon Ge_\gamma$, wherein X is at least one element selected from the group of Ga, In, Tl, Pb, Sn, Bi, Cd, Hg, Mn, Dy, Cu and Au, and $\alpha$, $\beta$, $\delta$, $\varepsilon$, and $\gamma$ have units of atomic % and satisfy the following relationships: when $\alpha = \beta = 0$, $\delta + \varepsilon + \gamma = 100$, $60 \leq \delta \leq 80$, $0 \leq \varepsilon \leq 30$, and $1 \leq \gamma \leq 10$, and when at least one of $\alpha$ and $\beta$ is greater than 0, $\alpha + \beta + \delta + \varepsilon + \gamma = 100$, $5 \leq \alpha + \beta + \gamma \leq 9$, $0 \leq \alpha \leq 2$, $0 \leq \beta \leq 8$, $60 \leq \delta \leq 80$, $0 \leq \varepsilon \leq 30$, and $1 \leq \gamma < 9$.

Therefore, the present invention is also applicable to any phase change optical recording media if satisfying the requirements mentioned above. Specific examples of such media include phase change optical recording media such as:

(a) a blue ray disc in which a recording laser has around 405 nm with an NA of 0.85 and in which each layer is formed in the reversed order, and

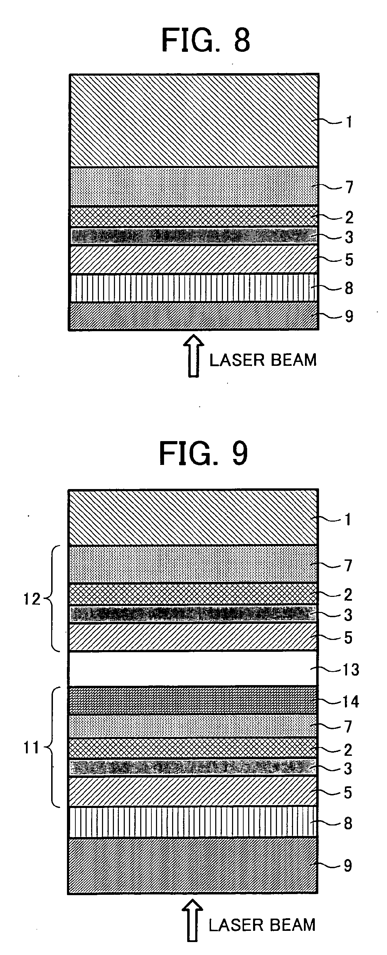

(b) a double layer DVD in which another optical recording medium having a different structure from or the same structure as the structure described in Figs.5, 6 or 7 is inserted between the second protective layer 8 and the second substrate 9 with an intermediate layer. Fig.8 illustrates an embodiment of (a) in which the reflective layer 7, the first protective layer 2, the recording layer 3, and the second protective layer 5 are overlaid on the first substrate, which has a thickness of 1.1 mm. Also, the second substrate 9, which has a thickness of 0.1 mm, is bonded to the second protective layer 5 with a resin protective layer 8 therebetween. Fig.9 illustrates an embodiment of (b) which is formed of a second information layer 12, which is overlaid on the first substrate 1, an intermediate layer 13, which is overlaid on the second information layer 12, and a first information layer 11, which is overlaid on the intermediate layer 13. The second information layer is formed of the reflective layer 7, which is overlaid on the first substrate 1, the first protective layer 2, which is overlaid on the reflective layer 7, the recording layer 3, which is overlaid on the first protective layer 2, and the second protective layer 5, which is overlaid on the recording layer 3. The first information layer 11 is formed of a heat diffusion layer 14, which is overlaid on the intermediate layer 13, the reflective layer 7, which is overlaid on the heat diffusion layer 14, the first protective layer 2, which is overlaid on the reflective layer 7, the recording layer 3, which is overlaid on the first protective layer 2, and the second protective layer 5, which is overlaid on the recording layer 3. Further the second substrate 9 is bonded to the second protective layer 5 in the first information layer 11 with the resin protective layer 8 therebetween.

Having generally described this invention, further understanding can be obtained by reference to certain specific examples which are provided herein for the purpose of illustration only and are not intended to be limiting.

## EXAMPLES

### Example 1

An optical disc was manufactured by overlaying each layer on a polycarbonate substrate in the following order using a sputtering method:

a first protective layer which is made of ZnS (80 mole %)- SiO$_2$ (20 mole %) and has a thickness of 55 nm;
an oxide layer which is made of ZrO$_2$ (80 mole %) including Y$_2$O$_3$ (8 mole %) - TiO$_2$ (20 mole %) and has a thickness of 3 nm;
a recording layer which is made of Ag$_1$In$_4$Sb$_{71}$Te$_{21}$Ge$_3$ and has a thickness of 11 nm;
a second protective layer which is made of ZnS (80 mole %) - SiO$_2$ (20 mole %) and has a thickness of 11 nm;
a sulfuration protection layer which is made of Si and has a thickness of 4 nm; and
a reflective layer which is made of Ag and has a thickness of 140 nm.

The polycarbonate substrate has a diameter of 12 cm and a thickness of 0.6 mm. In addition, guide grooves are formed thereon at a track pitch of 0. 74 $\mu$m. Further a resin protection layer is overlaid thereon using a spin coating method and finally another polycarbonate substrate having a diameter of 12 cm and a thickness of 0.6 mm is bonded thereto. However, when at least one oxide layer is provided, a process of forming such an oxide layer is inserted before and/or after the process of forming the recording layer.

The thus manufactured medium was initialized under the conditions described in the row of Example 1 in Table 1.

After initialization, reflectivity of the medium was measured using an optical disc estimation device (DDU-1000, which was manufactured by Pulstec Industrial Co., Ltd.) having a pickup emitting light with a wavelength of 660 nm and including a lens with NA of 0.65, to estimate the distribution of reflectivity in the circumferential direction and in the entire surface of the disc.

In addition, after measuring the reflectivity, random signals were repeatedly recorded twice using an EFM+ modulation method under the conditions such that the recording linear velocity is 14.0 m/s and the linear density is 0.267 μm/bit. Then recording characteristics (i.e., jitters (DOW1 characteristics) ) were estimated at a playback linear velocity of 3.5 m/s and with a playback power of 0.7 mW. The jitter is a value obtained by normalizing data to clock jitter σ using a detection window width of Tw.

In order to estimate the preservation reliability of each disc, the recording characteristics were measured again after the disc had been preserved in a constant temperature chamber at 80 °C and 85% RH for 300 hours.

The estimation results are shown in Table 2. The estimation criteria are as follows.

The reflectivity distribution in the circumferential direction was estimated based on reflectivity variance in the same circumference and the criteria are "uniform", "slightly non-uniform" and "non-uniform" when the variance is less than 1%, from 1% to 2% and greater than 2%, respectively.

The reflectivity distribution in the entire surface is estimated based on variance to the average reflectivity of each circumference and the criteria are "uniform", "slightly non-uniform" and "non-uniform" when the variance is less than 1%, from 1% to 2% and greater than 2%, respectively.

With regard to the DOW1 characteristics, the criteria thereof are E for excellent, F for fair, and B for bad when the jitter is not greater than 9%, greater than 9% but not greater than 10%, and greater than 10%, respectively.

Preservation reliability was estimated based on jitter variance after the medium had been preserved in a constant temperature chamber at 80 °C and 85% RH for 300 hours. The criteria thereof are E for excellent, F for fair, and B for bad when the jitter variance is not greater than 0.5%, greater than 0.5% but not greater than 1.0%, and greater than 1.0%, respectively. Comparative Examples 1 to 4 are not estimated for preservation reliability.

The medium manufactured in Example 1 showed excellent results for the reflectivity distributions in the circumferential direction and in the entire surface of the disc, and the DOW 1 characteristics at a recording linear velocity of 14 m/s. In addition, the characteristics of the medium did not deteriorate after preserving the medium in a constant temperature chamber, namely the medium has an excellent preservation reliability.

## Example 2

The medium manufactured in Example 1 was initialized under the same conditions as illustrated in Example 1 except that the power density of initialization light was 16.0 mW/μm$^2$ and the linear velocity of initialization light beam was 9 m/s and estimated.

The results of the disc of Example 2 are shown in Table 2. The medium of Example 2 showed excellent results for reflectivity distributions in the circumferential direction and in the entire surface of the disc, DOW 1 characteristics at a recording linear velocity of 14 m/s and preservation reliability as good as the medium of Example 1.

## Example 3

The medium manufactured in Example 1 was initialized under the same conditions as illustrated in Example 2 except that the power density of initialization light was 15.3 mW/μm$^2$ and the transfer pitch of initialization light beam was 18 μm/r and estimated.

The results are shown in Table 2. The medium of Example 3 showed excellent results for reflectivity distributions in the circumferential direction and in the entire surface of the disc, DOW 1 characteristics at a recording linear velocity of 14 m/s and preservation reliability as good as in the media of Examples 1 and 2.

## Example 4

The medium manufactured in Example 1 was initialized under the conditions described in the column of Example 4 in Table 1.

The results are shown in Table 2. The medium of Example 4 showed excellent results for reflectivity distributions in the circumferential direction and in the entire surface of the disc and DOW 1 characteristics at a recording linear velocity of 14 m/s and preservation reliability as good as the medium of Examples 1 to 3.

## Example 5

The optical disc of Example 5 was manufactured in the same manner as illustrated in Example 1 except that the recording material was changed to $Ag_1In_3Sb_{72}Te_{20}Ge_4$. The medium was initialized under the same conditions as illustrated in Example 1 and evaluated.

The results are shown in Table 2. The medium of Example 5 showed excellent results for reflectivity distributions in the circumferential direction and in the entire surface of the disc, DOW 1 characteristics at a recording linear velocity of 14 m/s and preservation reliability as good as the media of Examples 1 to 4.

## Example 6

The optical disc of Example 6 was manufactured in the same manner as illustrated in Example 1 except that the recording materials used were $Ag_1In_3Sb{-}_{70}Te_{21}Ge_5$. The medium was initialized under the same conditions as illustrated in Example 1 and evaluated.

The results are shown in Table 2. The medium for use in Example 6 showed excellent results for reflectivity distributions in the circumferential direction and in the entire surface of the disc, DOW 1 characteristics at a recording linear velocity of 14 m/s and preservation reliability as good as in Examples 1 to 5.

## Example 7

The optical disc of Example 7 was manufactured in the same manner as illustrated in Example 1 except that the recording layer had a thickness of 18 nm. The medium was initialized under the same conditions as illustrated in Example 1 and evaluated.

The results are shown in Table 2. Although the reflectivity distributions in the circumferential direction and in the entire surface of the disc were slightly non-uniform and DOW1 characteristics (jitter) surpassed 9%, the characteristics of the disc were not bad on the whole.

## Example 8

The optical disc of Example 8 was manufactured in the same manner as illustrated in Example 1 except that the oxide layer including $ZrO_2$ as a main component was not provided. The medium was initialized under the same conditions as illustrated in Example 1 and evaluated.

The results are shown in Table 2. The DOW 1 characteristics at a recording linear velocity of 14 m/s and preservation reliability thereof were excellent but the reflectivity distributions in the circumferential direction and in the entire surface of the disc were slightly non-uniform.

## Example 9

The optical disc of Example 9 was manufactured in the same manner as illustrated in Example 1 except that the oxide layer including $ZrO_2$ as a main component had a thickness of 20 nm. The medium was initialized under the same conditions as illustrated in Example 1 and evaluated.

The results are shown in Table 2. The reflectivity distributions in the circumferential direction and in the entire surface of the disc were excellent but the DOW 1 characteristics at a recording linear velocity of 14 m/s and preservation reliability thereof deteriorated.

## Example 10

The optical disc of Example 10 was manufactured in the same manner as illustrated in Example 1 except that the oxide layer including $ZrO_2$ as a main component had a thickness of 8 nm. The medium was initialized under the same conditions as illustrated in Example 1 and evaluated.

The results are shown in Table 2. The reflectivity distributions in in the circumferential direction and in the entire surface of the disc and DOW 1 characteristics at a recording linear velocity of 14 m/s were excellent but preservation reliability thereof deteriorated.

**Comparative Example 1**

The medium manufactured in Example 1 was initialized in the same manner as illustrated in Example 1 except that the linear velocity of irradiation light beam was 6 m/s, and was evaluated.

The results are shown in Table 2. The reflectivity distributions in the circumferential direction and in the entire surface of the disc were uniform but the DOW 1 characteristics at a recording linear velocity of 14 m/s were not satisfactory.

**Comparative Example 2**

The medium manufactured in Example 1 was initialized in the same manner as illustrated in Example 1 except that the linear velocity of irradiation light beam was 14 m/s, and was evaluated.

The results are shown in Table 2. The reflectivity distributions in the circumferential direction and in the entire surface of the disc were non-uniform, i.e., the reflectivity fluctuated, and in addition the DOW 1 characteristics at a recording linear velocity of 14 m/s were also not satisfactory.

**Comparative Example 3**

The medium manufactured in Example 1 was initialized under the conditions of Comparative Example 3 shown in Table 1 and estimated.

The results are shown in Table 2. The reflectivity distributions in the circumferential direction and in the entire surface of the disc were non-uniform, i.e., the reflectivity fluctuated, and in addition the DOW1 characteristics at a recording linear velocity of 14 m/s were also not satisfactory.

**Comparative Example 4**

The medium manufactured in Example 1 was initialized under the conditions of Comparative Example 4 shown in Table 1 and evaluated.

The results are shown in Table 2. The reflectivity distributions in the circumferential direction and in the entire surface of the disc were non-uniform, i.e., the reflectivity fluctuated, and in addition the DOW 1 characteristics at a recording linear velocity of 14 m/s were also not satisfactory.

Table 1

| | Power density of initialization light (mW/$\mu$m$^2$) | Output Power of light source (mW) | Area of light beam spot ($\mu$m$^2$) | Linear velocity of initialization light beam | Transfer pitch of initialization light beam ($\mu$m/r) |
|---|---|---|---|---|---|
| Example 1 | 17.3 | 1300 | 75 | 11.0 | 37 |
| Example 2 | 16.0 | 1200 | 75 | 9.0 | 37 |
| Example 3 | 15.3 | 1150 | 75 | 9.0 | 18 |
| Example 4 | 17.5 | 840 | 48 | 11.0 | 15 |
| Example 5 | 17.3 | 1300 | 75 | 11.0 | 37 |
| Example 6 | 17.3 | 1300 | 75 | 11.0 | 37 |
| Example 7 | 17.3 | 1300 | 75 | 11.0 | 37 |
| Example 8 | 17.3 | 1300 | 75 | 11.0 | 37 |
| Example 9 | 17.3 | 1300 | 75 | 11.0 | 37 |
| Example 10 | 17.3 | 1300 | 75 | 11.0 | 37 |
| Comparative Example 1 | 17.3 | 1300 | 75 | 6.0 | 37 |
| Comparative Example 2 | 17.3 | 1300 | 75 | 14.0 | 37 |

Table 1   (continued)

| | Power density of initialization light (mW/$\mu$m$^2$) | Output Power of light source (mW) | Area of light beam spot ($\mu$m$^2$) | Linear velocity of initialization light beam | Transfer pitch of initialization light beam ($\mu$m/r) |
|---|---|---|---|---|---|
| Comparative **Example 3** | 10.7 | 800 | 75 | 60.0 | 37 |
| Comparative Example 4 | 9.0 | 900 | 100 | 6.0 | 37 |

Table 2

| | Reflectivity distribution in circumferential direction | Reflectivity distribution in entire surface | DOW 1 characteristics at a recording linear velocity of 14 m/s (E: excellent; F: fair; and B: bad) | Preservation reliability |
|---|---|---|---|---|
| Example 1 | Uniform | Uniform | E | E |
| Example 2 | Uniform | Uniform | E | E |
| Example 3 | Uniform | Uniform | E | E |
| Example 4 | Uniform | Uniform | E | E |
| Example 5 | Uniform | Uniform | E | E |
| Example 6 | Uniform | Uniform | E | E |
| Example 7 | Slightly non-uniform | Slightly non-uniform | F | E |
| Example 8 | Uniform | Uniform | E | F |
| Example 9 | Uniform | Uniform | F | B |
| Example 10 | Slightly non-uniform | Slightly non-uniform | E | E |
| Comparative Example 1 | Uniform | Uniform | B | - |
| Comparative Example 2 | Non-uniform | Non-uniform | B | - |
| Comparative Example 3 | Non-uniform | Non-uniform | B | - |
| Comparative Example 4 | Non-uniform | Non-uniform | B | - |

According to the present invention, an optimal initialization method is provided for a phase change optical recording medium in which information can be recorded over a wide range of recording linear velocity of from 3.5 m/s to 14 m/s.

This document claims priority and contains subject matter related to Japanese Patent Applications No. 2003-010391 and 2003-371031, filed on January 17, 2003, and October 30, 2003, respectively.

**Claims**

1.  An initialization method comprising:

    initializing a phase change optical recording medium with a laser beam with a power density of from 15 to 22

$mW/\mu m^2$ at a linear velocity of from 8 to 12 m/s to initialize the phase change optical recording medium, wherein the phase change optical recording medium comprises:

a transparent substrate having a guide groove on the surface thereof;
a first protective layer which is overlaid on the transparent substrate;
a recording layer which is overlaid on the first protective layer and which essentially consists of a material which is represented by the following composition formula: $Ag\alpha X\beta Sb\delta Te\varepsilon Ge\gamma$, wherein X is at least one element selected from the group of Ga, In, Tl, Pb, Sn, Bi, Cd, Hg, Mn, Dy, Cu and Au, and $\alpha$, $\beta$, $\delta$, $\varepsilon$, and $\gamma$ have units of atomic % and satisfy the following relationships:
when $\alpha = \beta = 0$,

$$\delta + \varepsilon + \gamma = 100,$$

$$60 \leq \delta \leq 80,$$

$$0 \leq \varepsilon \leq 30,$$

and

$$1 \leq \gamma \leq 10,$$

and
when at least one of $\alpha$ and $\beta$ is greater than 0,

$$\alpha + \beta + \delta + \varepsilon + \gamma = 100,$$

$$5 \leq \alpha + \beta + \gamma \leq 9,$$

$$0 \leq \alpha \leq 2,$$

$$0 \leq \beta \leq 8,$$

$$60 \leq \delta \leq 80,$$

$$0 \leq \varepsilon \leq 30, \text{ and}$$

$$1 \leq \gamma \leq 9; \text{ and}$$

a second protective layer which is overlaid on the recording layer; and
a reflective layer which is overlaid on the second protective layer.

2. The initialization method according to Claim 1, wherein the recording layer has a thickness of from 8 to 20 nm.

3. 'The initialization method according to Claim 1 or 2, wherein the phase change optical recording medium further comprises an oxide layer which comprises at least $ZrO_2$ and which is located in at least one of a position between the recording layer and the first protective layer and a position between the recording layer and the second protective layer.

4. The initialization method according to Claim 3, wherein the oxide layer comprises $ZrO_2$ as a main component.

5. The initialization method according to Claim 3 or 4,
   wherein the oxide layer comprises a titanium oxide.

6. The initialization method according to Claim 5, wherein the content of the titanium oxide is not greater than 60 mole % based on a total amount of materials included in the oxide layer.

7. The initialization method according to any one of Claims 3 to 6, wherein the oxide layer further comprises at least one of a rare earth oxide and an oxide of a group IIa element exclusive of Be.

8. The initialization method according to Claim 7, wherein a content of said at least one of the rare earth oxide and the oxide of a group IIa element exclusive of Be ranges from 1 to 10 mole % based on $ZrO_2$.

9. The initialization method according to any one of Claims 3 to 8, wherein the oxide layer has a thickness of from 1 to 20 nm.

10. The initialization method according to any one of Claims 1 to 9, wherein the irradiation is performed while the laser beam forms a spot having an area not greater than 200 $\mu m^2$ on a surface of the recording layer, and wherein a light source of the irradiation laser beam has an output power of from 0.7 to 2.5 W.

11. The initialization method according to any one of Claims 1 to 10, wherein the linear velocity is in a range within + or -2 m/s of a crystallization limit speed of the recording layer.

12. The initialization method according to any one of Claims 1 to 11, wherein the irradiation is performed while the laser beam forms an oval-shaped spot, wherein the following relationship is satisfied: $d/n \leq pf \leq d(n-1)/n$,
    wherein pf represents a feeding pitch of the laser beam, d represents a half width diameter of the oval-shaped spot in a longitudinal direction, and n is an integer of from 2 to 5, and wherein there is no portion in the recording layer which is subject to irradiation multiple times.

FIG. 1

# FIG. 2

14m/s DOW1 JITTER (%)

POWER DENSITY OF IRRADIATED LIGHT BEAM (mW/$\mu$m²)

# FIG. 3

14m/s DOW1 JITTER (%)

LINEAR VELOCITY OF IRRADIATED LIGHT BEAM (m/s)

- 0.7W
- 0.9W
- 1.1W
- 1.3W
- 1.5W

# FIG. 4

FIG. 5

⇓ LASER BEAM

— 1
— 2
— 3
— 4
— 5
— 6
— 7
— 8
— 9

FIG. 6

⇓ LASER BEAM

— 1
— 2
— 4
— 3
— 5
— 6
— 7
— 8
— 9

FIG. 7

⇓ LASER BEAM

— 1
— 2
— 4
— 3
— 4
— 5
— 6
— 7
— 8
— 9

# FIG. 8

LASER BEAM

# FIG. 9

LASER BEAM